# EUROPÄISCHE PATENTSCHRIFT

(11) **EP 1 567 791 B1**
(45) Veröffentlichungstag und Bekanntmachung des Hinweises auf die Patenterteilung: **02.11.2006**
(21) Anmeldenummer: 03767415.7
(22) Anmeldetag: 10.11.2003
(51) Int. Cl.: F16H 55/26, G07C 5/12

(54) **GETRIEBEEINHEIT**
TRANSMISSION ASSEMBLY
UNITE DE TRANSMISSION

(30) Priorität: 04.12.2002 DE 10256717
(43) Veröffentlichungstag der Anmeldung: 31.08.2005
(73) Patentinhaber: SIEMENS AKTIENGESELLSCHAFT, 80333 München (DE)
(72) Erfinder: HAUTVAST, Heinz-Josef, 78086 Brigachtal (DE)
(86) Internationale Anmeldenummer: PCT/DE2003/003719
(87) Internationale Veröffentlichungsnummer: WO 2004/051117

(56) Entgegenhaltungen:
- EP-A- 0 306 907
- US-A- 4 858 135
- PATENT ABSTRACTS OF JAPAN vol. 1999, no. 11, 30. September 1999 (1999-09-30) & JP 11 173166 A (AISAN IND CO LTD), 29. Juni 1999 (1999-06-29)

## Beschreibung

Die Erfindung betrifft eine Getriebeeinheit mit einer Zahnstange und einem Zahnrad, das mit einer eine Steuerkurve bildenden Welle verbunden ist, und das in die Zahnstange eingreift, diese Merkmale sind aus der EP 0306907 A bekannt.

Solche Getriebeeinheiten werden vielfältig in feinmechanischen Geräten eingesetzt, bei denen mechanische Abläufe zyklisch gesteuert werden. Bei Fahrtenschreibern ist es beispielsweise erforderlich, das Abheben und Senken eines Schreibstiftes zu steuern, der für verschiedene Registrieraufgaben verwendet wird. Bei der üblicherweise manuellen Montage der Geräte werden die Zahnstange einerseits und das Zahnrad andererseits ineinander gefügt, wobei die beiden Teile in einer bestimmten Position zusammengefügt werden müssen, damit die Steuerkurve ihre steuernde Aufgabe korrekt erfüllen kann.

Dazu ist es bekannt, sowohl die Zahnstange als auch das Zahnrad mit einer Markierung zu versehen, so daß derjenige, der die Montage durchführt, die Zahnstange und das Zahnrad exakt zueinander ausrichten kann. Aus Kostengründen wird dabei in der Regel keine farbliche Markierung verwendet, sondern bei der Herstellung der Zahnstange und des Zahnrades, die in der Regel Kunststoffspritzteile sind, wird eine entsprechende als Markierung dienende Oberflächenstruktur angebracht.

Mit fortschreitender Miniaturisierung wird es immer schwieriger, bei der Montage die Zahnstange und das Zahnrad in der exakten Position zusammen zu fügen. Falsch gesetzte Teile werden oftmals erst bei der Endkontrolle festgestellt, so daß ein erheblicher Aufwand erforderlich ist, um die Position der Zahnstange und des Zahnrades zu korrigieren. Durch falsch zusammengesetzte Getriebeteile entstehen daher hohe Kosten entweder durch erhöhten Ausschuß oder durch die nachträgliche Fehlerbeseitigung.

Aufgabe der Erfindung ist es daher, eine Getriebeeinheit anzugeben, bei der sichergestellt ist, daß Zahnstange und Zahnrad in der korrekten Position zusammengefügt werden.

Diese Aufgabe wird erfindungsgemäß durch eine Getriebeeinheit der eingangs genannten Art gelöst, die dadurch gekennzeichnet ist, daß an der Zahnstange ein Anschlag vorgesehen ist, der mit einem Vorsprung des Zahnrades oder der Welle zusammenwirkt.

Durch den erfindungsgemäßen Anschlag ist es nicht mehr erforderlich, die Übereinstimmung zweier Markierungen durch Augenschein festzustellen, sondern in einer bestimmten Position ist nur noch eine Montagemöglichkeit gegeben. Der Vorteil der Erfindung besteht darin, daß die Getriebeteile zusammengefügt werden können, ohne daß optisch schwer zu erkennende Markierungen zu berücksichtigen sind.

Bei der erfindungsgemäßen Ausgestaltung einer Getriebeeinheit ist es möglich, die Getriebeteile weiter zu verkleinern, ohne daß dadurch Montageprobleme auftreten. Insbesondere ist es möglich, die Ausschußrate zu verringern. Da der fehlerträchtige Montageschritt vereinfacht wird, verkürzt sich die Montagezeit, ohne daß dadurch die Ausschußrate erhöht wird.

Bei der vorzugsweise vorzusehenden Fertigung der Getriebeteile als Kunststoffspritzteile ist die erfindungsgemäße Ausbildung des Vorsprungs und des Anschlags ohne zusätzlichen Kostenaufwand zu realisieren.

In einer vorteilhaften Ausgestaltung der Erfindung ist ein Zahn des Zahnrades so ausgestaltet, daß er einen Vorsprung bildet, der mit dem Anschlag zusammenwirken kann.

Die Erfindung wird nachfolgend anhand eines Ausführungsbeispieles näher beschrieben. Es zeigt:
- Figur 1: eine erste dreidimensionale Ansicht einer erfindungsgemäßen Getriebeeinheit und
- Figur 2: eine zweite dreidimensionale Ansicht einer erfindungsgemäßen Getriebeeinheit.

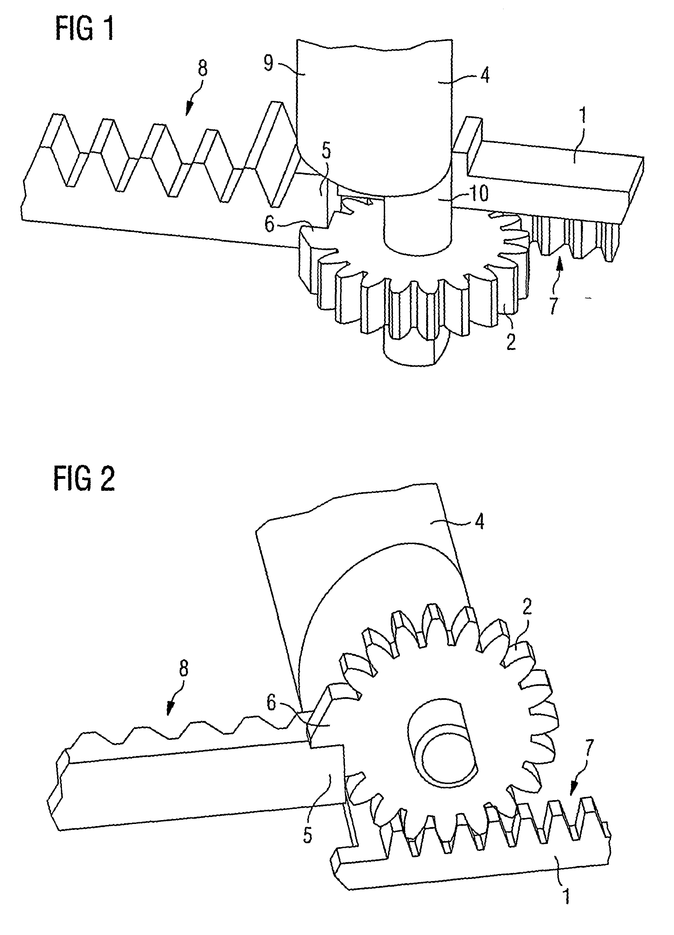

Die in der Figur 1 dargestellte Getriebeeinheit besitzt eine Zahnstange 1, die zwei gezahnte Bereiche 7 und 8 aufweist. In den ersten gezahnten Bereich 7 greift die Zahnung eines Zahnrades 2 ein. Das Zahnrad 2 ist mit einer Welle 4 verbunden, wobei ein erster Bereich 10 mit dem Zahnrad in Verbindung steht und ein zweiter Bereich 9 eine Steuerkurve bildet. Die Rotationsachse des Zahnrades 2 verläuft durch den Wellenabschnitt 10, während der die Steuerkurve bildende Abschnitt 9 eine zu der ersten Achse parallele und beabstandende Achse besitzt. Der Steuerkurvenabschnitt 9 muß aber nicht eine kreisrunde oder ovale Form besitzen, vielmehr kann die Form des Steuerkurvenabschnitts 9 an die entsprechende Steueraufgabe angepaßt sein.

Der zweite gezahnte Bereich 8 der Zahnstange 1 kann beispielsweise für den Antrieb der Zahnstange 1 eingesetzt werden.

Das Zahnrad 2 besitzt einen Vorsprung 6, der anstelle eines beziehungsweise mehrerer normaler Zähne ausgeprägt ist. Der Vorsprung 6 besitzt in diesem Ausführungsbeispiel die Breite mehrerer normaler Zähne. Der Vorsprung 6 wirkt mit einem Anschlag 5 zusammen, der an der Zahnstange 1 gebildet ist. Beim Zusammensetzen der Zahnstange 1 und des Zahnrades 2 in einer extremen Position des Zahnrades gegenüber der Zahnstange 1 ist der Vorsprung 6 mit dem Anschlag 5 in Berührung. Das Zusammensetzen kann beispielsweise so erfolgen, daß zunächst der Vorsprung 6 mit dem Anschlag 5 in Berührung gebracht wird, so daß anschließend sichergestellt ist, daß die Zahnung des Zahnrades 2 und der Zahnstange 1 richtig ineinander greifen.

Nach dem korrekten Zusammensetzen müssen die beiden Flächen des Anschlags 5 und zwei Flächen des Vorsprungs 6 formschlüssig aneinander liegen.

Die Figur 2 zeigt eine zweite dreidimensionale Ansicht der erfindungsgemäßen Getriebeeinheit von Figur 1, wobei in dieser Perspektive die Stirnseite des Zahnrades 2 sichtbar ist. In der Ausführung der Figuren 1 und 2 ist es nur möglich, das Zahnrad um eine dreiviertel Umdrehung rotieren zu lassen, da danach der Vorsprung 8 nicht mehr mit der Zahnung 7 der Zahnstange 1 zusammenpaßt. Allenfalls wäre es möglich, die Zahnstange 1 so zu profilieren, daß der Vorsprung 6 in eine entsprechende Vertiefung der Zahnstange 1 eingreifen kann.

In anderen Ausführungen ist es jedoch auch möglich, statt des Vorsprunges 6 am Zahnrad 2 einen Vorsprung an der Stirnseite des Zahnrades 2 oder an der Welle, insbesondere an seinem Steuerkurvenabschnitt bzw. dessen Stirnbereich vorzusehen. Bei einer solchen Ausgestaltung wäre es wesentlich einfacher, eine mehrfache Drehung des Zahnrades 2 zu ermöglichen, ohne daß der Vorsprung die Drehung behindert.

## Patentansprüche

1. Getriebeeinheit mit
- einer Zahnstange (1) und
- einem Zahnrad (2), das mit einer eine Steuerkurve bildenden Welle (4) verbunden ist und das in die Zahnstange (1) eingreift,
**dadurch gekennzeichnet, daß**
an der Zahnstange (1) ein Anschlag (5) vorgesehen ist, der mit einem Vorsprung (6) des Zahnrads (2) oder der Welle (4) zusammenwirkt.

2. Getriebeeinheit nach Anspruch 1,
**dadurch gekennzeichnet, daß**
in der Zahnung des Zahnrads (2) der Vorsprung ausgebildet ist.

3. Getriebeeinheit nach Anspruch 1 oder 2,
**dadurch gekennzeichnet, daß**
die Zahnstange und das Zahnrad als Kunststoffspritzteile ausgebildet sind.

4. Verwendung der Getriebeeinheit nach einem der Ansprüche 1 bis 3 in einem Fahrtenschreiber zur Steuerung eines Schreibstiftes.

## Claims

1. Transmission assembly with
- a rack (1) and
- a gearwheel (2) which is connected to a shaft (4) forming a control cam and which engages into the rack (1),
**characterized in that** the rack (1) has provided on it a stop (5) which cooperates with a projection (6) of the gearwheel (2) or of the shaft (4).

2. Transmission assembly according to Claim 1, **characterized in that** the projection is formed in the toothing of the gearwheel (2).

3. Transmission assembly according to Claim 1 or 2, **characterized in that** the rack and the gearwheel are produced as plastic injection moldings.

4. Use for the transmission assembly according to one of Claims 1 to 3 in a tachograph for controlling a recording stylus.

## Revendications

1. Unité de transmission comportant
- une crémaillère (1) et
- une roue dentée (2), qui est liée à un arbre (4) formant une came de commande et qui s'engrène dans la crémaillère (1),
**caractérisée par le fait que**,
sur la crémaillère (1), il est prévu une butée (5) qui concoure avec un taquet (6) de la roue dentée (2) ou de l'arbre (4).

2. Unité de transmission selon la revendication 1,
**caractérisée par le fait que** le taquet est formé dans la denture de la roue dentée (2).

3. Unité de transmission selon la revendication 1 ou 2,
**caractérisée par le fait que** la crémaillère et la roue dentée sont conçues comme pièces moulées par injection en matière plastique.

4. Utilisation de l'unité de transmission selon l'une des revendications 1 à 3 dans un tachygraphe pour y commander un stylet.
